# EUROPÄISCHE PATENTSCHRIFT

(11) **EP 1 647 663 B1**
(45) Veröffentlichungstag und Bekanntmachung des Hinweises auf die Patenterteilung: **11.06.2008**
(21) Anmeldenummer: 05450167.1
(22) Anmeldetag: 12.10.2005
(51) Int. Cl.: E06B 3/58, E06B 3/54, F16B 2/22, E04B 1/41

(54) **Halter für ein plattenförmiges Element**
Fastener for a panel element
Support pour un élément en forme de plaque

(30) Priorität: 13.10.2004 AT 17142004
(43) Veröffentlichungstag der Anmeldung: 19.04.2006
(73) Patentinhaber: Oberhofer, Alfons, 1070 Wien (AT)
(72) Erfinder: Oberhofer, Alfons, 1070 Wien (AT)

(56) Entgegenhaltungen:
- EP-A- 1 160 411
- DE-A1- 4 331 831
- DE-A1- 4 404 653
- DE-A1- 4 428 142
- DE-A1- 10 009 232
- DE-A1- 19 831 936
- DE-C1- 4 417 272

## Beschreibung

Die Erfindung betrifft einen Halter für ein plattenförmiges Element, wie z.B. eine Glasplatte, wobei der Halter einen Grundkörper aufweist, der zwei einander gegenüberliegende Schenkel aufweist, welche einen Aufnahmeschlitz für das auskragende plattenförmige Element bilden, und auf ihrer dem Aufnahmeschlitz zugekehrten Seite je zumindest ein Auflager für das plattenförmige Element aufweisen, wobei die Auflager in Auskragrichtung des plattenförmigen Elementes zueinander versetzt sind.

Eingangs erwähnte Halter bzw. Träger für plattenförmige Elemente sind beispielsweise aus DE 198 31 936 A bekannt, bei welchen eine Glasplatte zwischen zwei an gegenüberliegenden Schenkeln in horizontaler Richtung (bei im Wesentlichen horizontal ausgerichteter Platte) zueinander versetzten Auflagern gehalten ist, siehe z.B. den Katalog "Produktübersicht Junior" der Firma Pauli + Sohn GmbH, DE.

Mit einem solchen Träger ist allerdings ein Ausrichten der Glasplatte in Hinblick auf eine bestimmte Einbaulage, z.B. eine horizontale Einbaulage nur beschränkt möglich, und zwar lediglich durch eine geneigte Montage des Trägers an oder in einer Wand.

Unter dem Begriff "Auskragrichtung" ist allgemein ein in der Ebene des plattenförmigen Elementes liegender Richtung Vektor zu verstehen, der von den dem in dem Halter eingespannten Plattenende zu dem freien Plattenende gerichtet ist. Bei einer horizontal eingespannten Platte liegt die Auskragrichtung in einer horizontalen Ebene.

Mit dem Begriff "im Wesentlichen" in Auskragrichtung soll der Tatsache Rechnung getragen werden, dass das plattenförmige Element im Rahmen der Erfindung in Bezug auf eine Mittellage in zwei Richtungen, bei einer horizontalen Platte nämlich nach oben und unten verschwenkt werden kann, und dass nach einem Verschwenken der Platte Elemente etc., die z.B. in der Mittellage der Platte in Auskragrichtung zueinander angeordnet waren etc. dann nicht mehr exakt in dieser Richtung liegen.

Der Verschwenkbereich des plattenförmigen Elementes liegt dabei üblicherweise bei ± (5°-10°), kann aber in Einzelfällen darüber hinausgehen. In diesem Dokument soll daher der Begriff "im Wesentlichen in Auskragrichtung" Abweichungen von max. ca. ± 15° aus der aktuellen Auskragrichtung bedeuten.

Weiters bekannt sind Träger, bei denen die Glasplatte direkt von den Schenkeln des Halters abgestützt wird, wobei in einem der Schenkel eine Verstellschraube mit flacher Auflagefläche angeordnet ist, mit der eine Anpassung des Trägers an unterschiedliche Plattendicken vorgenommen werden kann.

Eine gezielte Ausrichtung der Glasplatte, insbesondere über einen größeren Verstellbereich (z.B. ± 10° nach oben und unten), ist mit solchen Trägern allerdings nicht möglich.

Es ist eine Aufgabe der Erfindung, ein einfaches und zuverlässiges Ausrichten einer von einem eingangs erwähnten Träger gehaltenen Platte, z.B. einer Glasplatte, vorzugsweise über einen größeren Winkelbereich zu ermöglichen.

Diese Aufgabe wird mit einem eingangs erwähnten Halter dadurch gelöst, dass erfindungsgemäß zumindest eines der Auflager derart verstellbar ist, dass bei einem Verstellen des Auflagers das plattenförmige Element um zumindest ein Auflager, welches an dem dem verstellbaren Auflager gegenüber liegenden Schenkel angeordnet ist, verkippt wird.

Dadurch wird es möglich, beispielsweise nachträglich nach dem Befestigen der Halter für die Platte in oder an einer Mauer die in dem/den Halter(n) eingespannte Platte nachträglich auszurichten, in dem das verstellbare Auflager entsprechend verstellt und so die Platte auf einfache Art und Weise z.B. nach oben oder unten verschwenkt werden kann.

Die Auflager befinden sich an gegenüberliegenden Schenkeln. Dies hat den Vorteil, dass dadurch einerseits ein Verkippen der Platte möglich wird, andererseits mit den Schenkeln die Platte aber auch auf einfache Weise gehalten werden kann.

Für die prinzipielle Funktion der Erfindung ist es grundsätzlich nebensächlich, wo die Auflager angeordnet sind. Allerdings ist es für eine einfache Verstellung des oder der verstellbaren Auflager von Vorteil, wenn das zumindest eine verstellbare Auflager der von den freien Endbereichen der Schenkel gebildeten Öffnung des Aufnahmeschlitzes näher liegt als das/die fixe(n) Auflager.

Von besonderem Vorteil ist es in diesem Zusammenhang, dass ein solches äußeres verstellbares Auflager besser zugänglich ist als ein inneres Auflager und somit die Verstellung einfacher möglich wird. Durch eine solche Ausgestaltung kann die gesamte Haltevorrichtung auch direkt in einer Wand montiert werden und bleibt trotzdem verstellbar. Bei einem hinteren verstellbaren Auflager ist ein solcher Einbau in die Wand in der Regel nicht möglich, da dann der Zugang zu dem hinteren Auflager nicht mehr gegeben ist; eine solche Haltevorrichtung kann üblicherweise nur Außen an der Wand befestigt werden, bzw. muss die Einstellung des hinteren Auflagers noch vor Einbau der Haltevorrichtung in die Wand erfolgen, was offensichtlich keine optimale Lösung ist.

Grundsätzlich ist dabei noch festzuhalten, dass die Auflager - insbesondere in ihrem Kontaktbereich zu der Platte - derart ausgebildet sind und/oder derart angeordnet sind, dass einerseits ein Einspannen der Platte zwischen den Auflagern möglich ist bzw. dass die Platte von den Auflagern in einer gewünschten Position gehalten wird, dass andererseits bei einem Verstellen des oder der verstellbaren Auflager auch ein Verkippen der Platte erfolgt. Eine Gestaltung bzw. Anordnung der Auflager, die lediglich ein Einspannen bzw. Halten der Platte ermöglicht, die aber ein Verkippen entsprechend der Erfindung zum Einstellen der Neigung der Platte nicht ermöglicht (kein oder nur minimales Verkippen), ist nicht im Sinne der vorliegenden Erfindung.

Um ein effektives Verstellen zu erreichen, ist es zweckmäßig, wenn das zumindest eine verstellbare Auflager zumindest im Wesentlichen im rechten Winkel zu der Auskragrichtung verstellbar ist.

Bei einer Variante dieser Ausführungsform ist das verstellbare Auflager eine Schraube, die in einer im Wesentlichen normal auf die Auskragrichtung gerichteten Gewindebohrung in dem zugeordneten Schenkel in unterschiedlichen Positionen einschraubbar und fixierbar ist. Hier ist das Auflager lediglich im rechten Winkel durch ein Hineinschrauben oder Herausschrauben der Schraube in die Bohrung normal zu der Auskragrichtung verstellbar, und ist somit einfach und kostengünstig zu realisieren.

Bei einer anderen Variante dieser Ausführungsform, die sehr kostengünstig und einfach zu verwenden ist und sich insbesondere dann eignet, wenn die Neigung der Platte lediglich einmal fix eingestellt werden soll, sind Bolzen unterschiedlicher Länge als verstellbares Auflager in einer im Wesentlichen normal auf die Auskragrichtung gerichteten Bolzenöffnung in dem dem verstellbaren Auflager zugeordneten Schenkel befestigbar.

In einer weiteren Ausführungsform der Erfindung ist weiters vorgesehen, dass neben der Verstellbarkeit in Richtung normal zu der Auskragrichtung das zumindest eine verstellbare Auflager weiters in einer im Wesentlichen zu der Auskragrichtung parallelen Richtung verstellbar ist, insbesondere indem das verstellbare Auflager entlang einer zu der Auskragrichtung geneigten Ebene verschiebbar ist.

Bei einer solchen Variante entsteht die horizontale, d.h. normal auf die Auskragrichtung gerichtete Verstellung des zumindest einen Auflagers, welche ja zu einer Verstellung des plattenförmigen Elementes führt, dadurch, dass das Auflager entlang einer schiefen Ebene bewegt wird, wodurch das Auflager auch in seiner Höhe (d.h. normal auf die Auskragrichtung) verstellt wird.

In einer weiteren Variante ist/sind das/die verstellbare(n) Auflager lediglich im Wesentlichen parallel zu der Auskragrichtung verstellbar. Je nach Stellung des verstellbaren Auflagers wird dann das plattenförmige Element ausgehend von einer Mittelstellung nach oben oder unten um das oder die weitere(n) Auflager verschwenkt.

Damit ein zuverlässiges und leichtes Verstellen möglich ist, ist vorgesehen, dass das verstellbare Auflager eine zu der Auskragrichtung geneigte Auflagefläche aufweist, mit welcher das Auflager mit dem plattenförmigen Element zusammenwirkt, wozu das plattenförmige Element einen entsprechend angepassten, geneigten Anschnitt aufweist.

Um eine Beschädigung des plattenförmigen Elementes zu vermeiden, liegt das plattenförmige Element auf einem Plattenauflagerelement auf, wobei das Plattenauflagerelement den mit der geneigten Auflagefläche des Auflagers zusammenwirkenden Abschnitt aufweist. Eine Bewegung findet somit lediglich zwischen dem Auflager und dem Plattenauflagerelement statt, sodass das plattenförmige Element nicht beschädigt werden kann.

Damit das plattenförmige Element bei einem Verstellen eine Verschwenkbewegung optimal und ungehindert ausführen kann, weist das Plattenauflagerelement einen Aufliegebereich für das Element auf, welcher zumindest in Auskragrichtung einen gekrümmten Verlauf aufweist und beispielsweise die Gestalt einer Kugeloberfläche aufweist.

Eine besonders einfache Verstellung des oder der verstellbaren Auflager lässt sich erreichen, wenn das verstellbare Auflager auf einem Gewindestift sitzt, der in dem Grundkörper drehbar gelagert ist. Durch Drehen des Gewindestiftes, vorzugsweise mit einem entsprechenden Werkzeug wie einem Schraubenzieher, wandert das Auflager entsprechend der Drehrichtung in oder entgegen der Auskragrichtung und hebt oder senkt so das verstellbare Auflager.

Eine zuverlässige Lagerung des plattenförmigen Elementes, welche eine gute Verschwenkung erlaubt, und bei der das plattenförmige Element vor Beschädigungen sicher ist, wird erreicht, wenn eines oder mehrere der Auflager zumindest im Auflagebereich des plattenförmigen Elementes einen elastischen Überzug aufweist/aufweisen oder vollständig aus einem elastischen Material gebildet ist/ sind.

Für gute Verstelleigenschaften weiters von Vorteil ist es, wenn ein dem zumindest einen verstellbaren Auflager gegenüberliegendes Auflager eine in Auskragrichtung abgerundete, konvexe Auflagefläche aufweist.

Bei einer konstruktiv einfachen und sehr stabilen Ausführungsform, die sich besonders für die Verwendung mit Glasdächern eignet, ist ein dem verstellbaren Auflager gegenüber liegendes Auflager als Schraube oder Bolzen mit einer vorzugsweise flachen Auflagefläche ausgebildet.

Um Beschädigungen des plattenförmigen Elementes zu verhindern, die sich bei dieser Ausführungsform insbesondere bei schweren Glasplatten ergeben können, umgreift ein Plattenhalteelement das plattenförmige Element in einem in den Aufnahmeschlitz hineinragenden Bereich, und das plattenförmige Element liegt mit dem Plattenhalteelement auf den Auflagern auf.

Um bei dieser Variante die Stabilität noch weiter zu erhöhen, ist das Plattenhalteelement in einem hinteren, der Öffnung des Grundkörpers abgewandten Bereich über ein Gelenk in dem Grundkörper gelagert. Auf diese Weise wird die Verschwenkbewegung eindeutig definiert und ein Herausgleiten des plattenförmigen Elementes in Auskragrichtung aus dem Halter heraus ist ebenfalls nicht möglich.

Im Folgenden ist die Erfindung an Hand der Zeichnung näher erläutert. In dieser zeigt
Fig. 1 einen Vertikalschnitt durch eine erste Variante eines erfindungsgemä-ßen Trägers,
Fig. 2 - Fig. 3 den Träger aus Fig. 1 mit unterschiedlich positionierter Glasplatte in einem Vertikalschnitt,
Fig. 4 eine zweite Variante eines Trägers in einem Vertikalschnitt,
Fig. 5 einen Schnitt entlang der Linie A-A in Fig. 5,
Fig. 6 eine dritte Ausführungsform eines erfindungsgemäßen Trägers in einem Vertikalschnitt, und
Fig. 7 und Fig. 8 die beiden Extremstellungen einer Glasplatte in einem Träger aus Fig. 6.

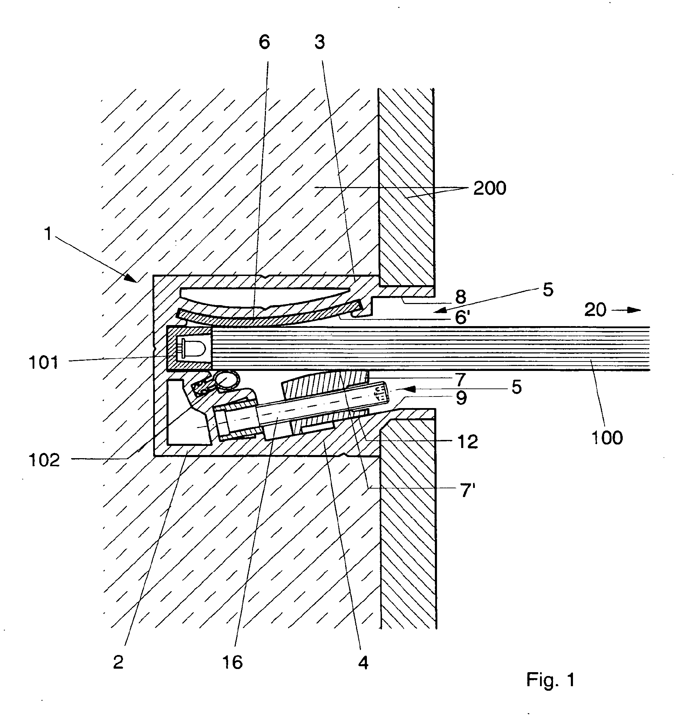

Figur 1 zeigt einen erfindungsgemäßen Träger 1, bestehend aus einem Grundkörper 2 mit einem oberen und einem unteren Schenkel 3, 4. Der Träger 1 ist z.B. aus einem Aluminiumprofil gebildet und in der gezeigten Darstellung in einer Wand 200 verlegt.

Die beiden Schenkel 3, 4 bilden einen Aufnahmeschlitz 5 für ein plattenförmiges Element 100, wie gezeigt z.B. für eine Glasplatte 100.

An der inneren, dem Aufnahmeschlitz 5 zugewandten Seite 8, 9 der Schenkel 3, 4, befindet sich je ein Auflager 6, 7, die in eingebauter Lage - wie gezeigt - im Wesentlichen in horizontaler Richtung zueinander versetzt angeordnet sind, wobei sich das untere Auflager 7 näher bei der von den freien Endbereichen der Schenkel gebildeten Öffnung des Aufnahmeschlitzes 5 befindet. Durch diese Anordnung ist das untere, wie weiter unten näher erläutert verstellbare Auflager 7 leicht zugänglich und ermöglicht so eine komfortable Verstellung des Auflagers 7.

Die Glasplatte 100 stützt sich auf den beiden Auflagern 6, 7 in bekannter Weise ab und wird so von dem Träger 1 in Position gehalten.

Weiters ist in Fig. 1 noch eine Lichtquelle 101 in Form einer LED zu erkennen, mit der die Glasplatte 100 beleuchtbar ist, so wie eine Gummidichtung 102 - z.B. ein Moosgummi -, mit dem der hintere Teil des Trägers inklusive der LED gegen Blicke von Außen abgedichtet wird.

Um eine Neigung der Glasplatte 100 aus der gezeigten Position heraus nach oben oder unten zu erlauben, ist erfindungsgemäß vorgesehen, dass zumindest eines der Auflager 6, 7 an den Innenseiten der Schenkel 3, 4 verstellbar ist. Grundsätzlich könnten beide Auflager verstellbar sein, einfacher zu realisieren und für die Zwecke der Erfindung völlig ausreichend ist es, wenn lediglich eines der beiden Auflager 6, 7, nämlich das untere, vordere Auflager 7 verstellbar ist.

Genereller Erfindungsgedanke ist der, dass sich durch das Verstellen des Auflagers 7 die Platte 100 hebt oder senkt, d.h. dass sich bei einem Verstellen des Auflagers 7 auch der Kontaktbereich bzw. die Kontaktfläche 7' des Auflagers 7 zu der Platte 100 hebt oder senkt.

Generell lässt sich dies dadurch realisieren, dass wie in Figur 1 dargestellt das zumindest eine verstellbare Auflager 7 entlang einer zu der Auskragrichtung 20 geneigten Ebene 12 verschiebbar ist.

Bei einer solchen Variante entsteht die horizontale, d.h. normal auf die Auskragrichtung gerichtete Verstellung des zumindest einen Auflagers 7 bzw. des Kontaktbereiches 7', welche ja zu einer Verstellung des plattenförmigen Elementes 100 führt, dadurch, dass das Auflager entlang einer schiefen Ebene bewegt wird, wodurch das Auflager auch in seiner Höhe (d.h. normal auf die Auskragrichtung) verstellt wird.

Das verstellbare Auflager 7 sitzt auf einem Gewindestift 16 sitzt, der in dem Grundkörper 2 drehbar gelagert ist. Durch Drehen des Gewindestiftes, vorzugsweise mit einem entsprechenden Werkzeug wie einem Schraubenzieher 22, wandert das Auflager 7 entsprechend der Drehrichtung in oder entgegen der Auskragrichtung und hebt oder senkt so das verstellbare Auflager 7.

Eine zuverlässige Lagerung des plattenförmigen Elementes, welche eine gute Verschwenkung erlaubt, und bei der das plattenförmige Element vor Beschädigungen sicher ist, wird erreicht, wenn eines oder mehrere der Auflager 6, 7 zumindest im Auflagebereich 6', 7' des plattenförmigen Elementes 100 einen elastischen Überzug aufweist/aufweisen oder vollständig aus einem elastischen Material gebildet ist/ sind.

Für gute Verstelleigenschaften weiters von Vorteil ist es, wenn das dem verstellbaren Auflager 7 gegenüberliegende Auflager 6 eine in Auskragrichtung 20 abgerundete, konvexe Auflagefläche 6' aufweist.

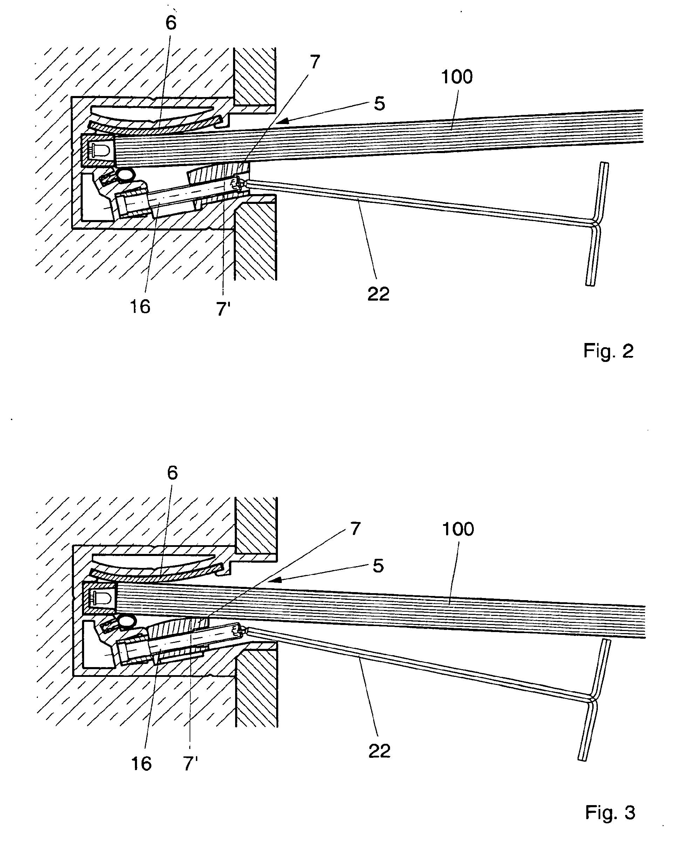

Figur 1 zeigt bei eine horizontale Lage der Platte 100. Figur 2 zeigt den Halter 1 mit einem weit nach außen verstellten Auflager 7. In dieser Position wird die Platte 100 nach oben gedrückt, d.h. um das fixe Auflager 6 nach oben verkippt. Figur 3 zeigt schließlich das Auflager 7 in der innersten Position, welche entsprechend zu einem Absinken bzw. nach unten Verkippen der Platte 100 um das Auflager 6 führt.

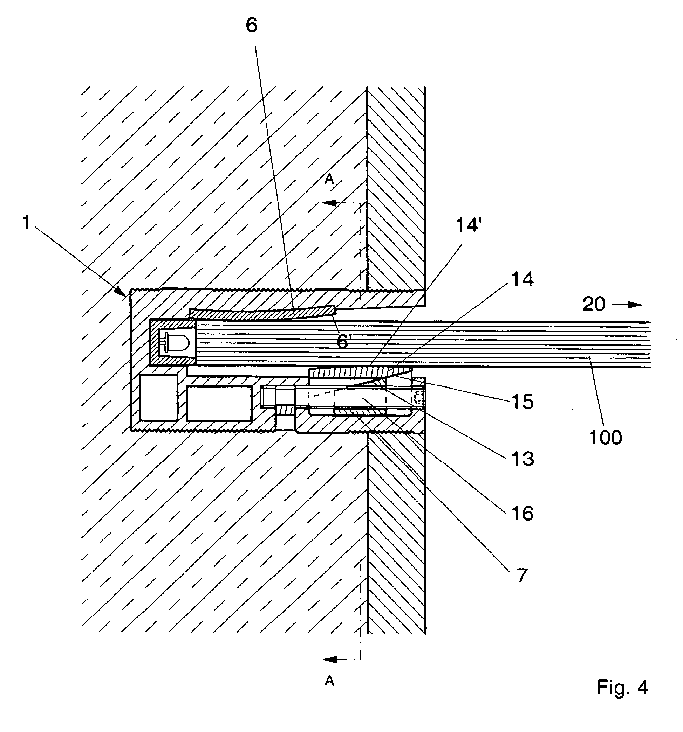

Eine zu den in Figur 1 - 3 gezeigten Variante ähnliche Ausführungsform ist in Figur 4 gezeigt. Gleiche Elemente in Figur 1 und Figur 4 tragen dieselben Bezugszeichen.

Im Unterschied zu der Ausführungsform nach Figur 1 - 3 ist in Figur 4 das Auflager 7 nicht entlang einer schiefen Ebene verschiebbar, sondern das verstellbare Auflager ist lediglich im Wesentlichen parallel zu der Auskragrichtung 20 verstellbar. Je nach Stellung des verstellbaren Auflagers 7 wird dann das plattenförmige Element ausgehend von einer Mittelstellung nach oben oder unten um das fixe Auflager 6 verkippt/verschwenkt.

Damit ein zuverlässiges und leichtes Verstellen möglich ist, ist vorgesehen, dass das verstellbare Auflager 7 eine zu der Auskragrichtung 20 geneigte Auflagefläche 7' aufweist, mit welcher das Auflager 7 mit dem plattenförmigen Element 100 zusammenwirkt. Dazu weist das plattenförmige Element 100 einen entsprechend angepassten, geneigten Anschnitt 15 auf.

Um eine Beschädigung des plattenförmigen Elementes zu vermeiden, liegt das plattenförmige Element 100 auf einem Plattenauflagerelement 14 auf, wobei das Plattenauflagerelement 14 den mit der geneigten Auflagefläche 7' des Auflagers 7 zusammenwirkenden Abschnitt 15 aufweist. Eine Bewegung findet somit lediglich zwischen dem Auflager 7 und dem Plattenauflagerelement 14 statt, sodass das plattenförmige Element 100 nicht beschädigt werden kann.

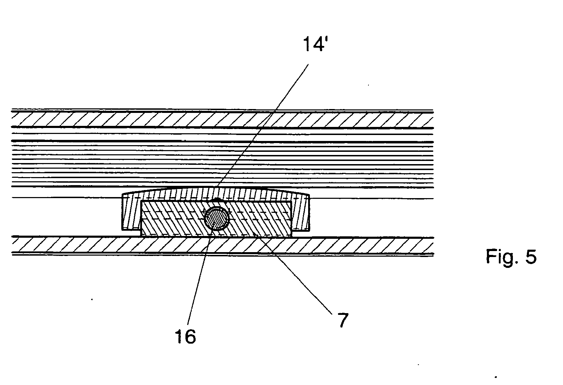

Damit das plattenförmige Element bei einem Verstellen eine Verschwenkbewegung optimal und ungehindert ausführen kann, weist das Plattenauflagerelement 14 einen Aufliegebereich 14' für das Element 100 auf, welcher zumindest in Auskragrichtung 20 einen gekrümmten Verlauf aufweist, und beispielsweise die Gestalt einer Kugeloberfläche 14' aufweist, wie dies in Figur 5 gut zu erkennen ist.

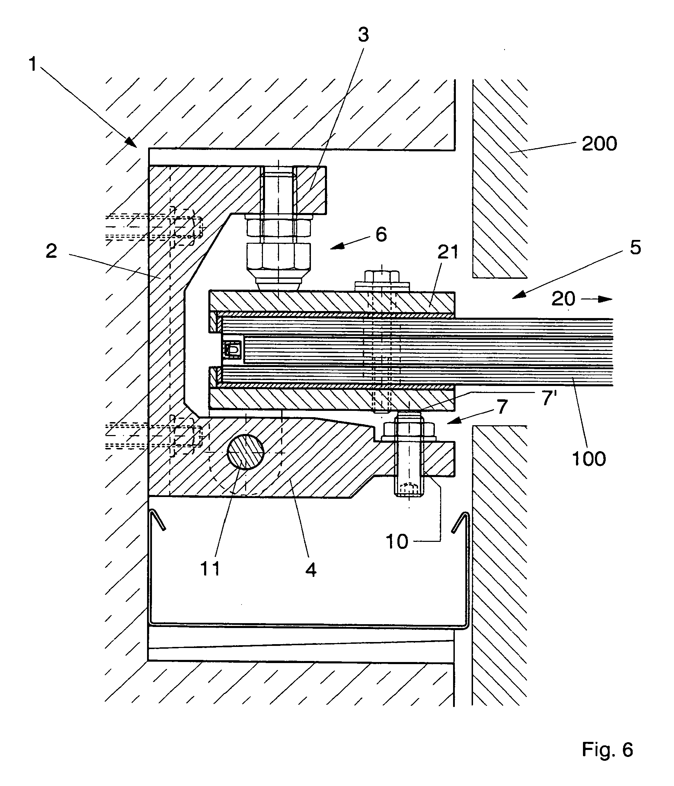

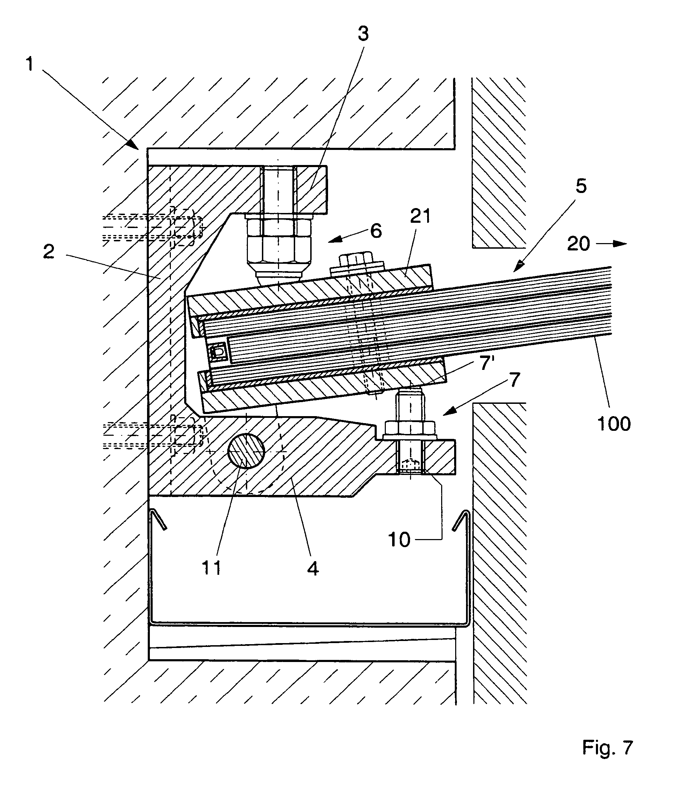

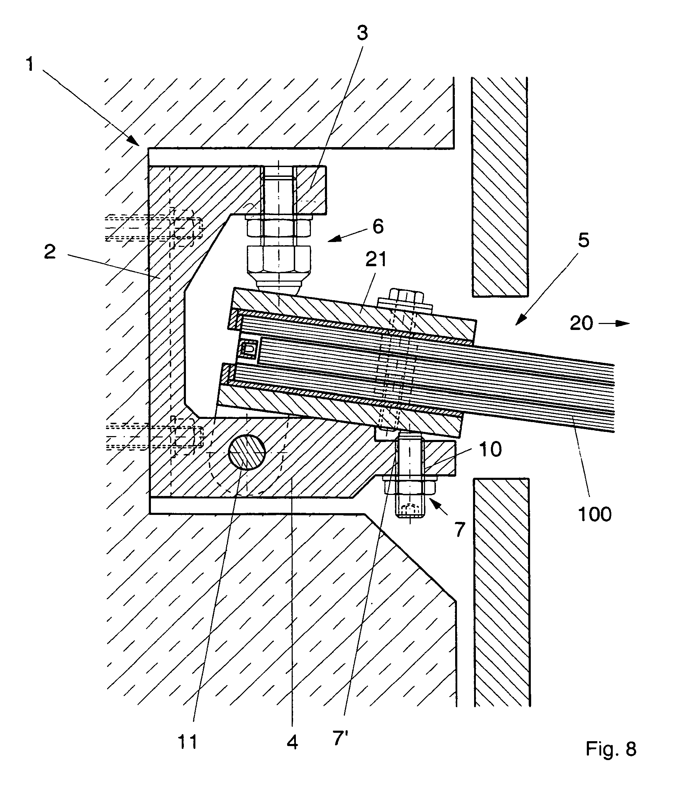

In den Figuren 6 - 8 ist noch eine Variante der Erfindung gezeigt, die sich besonders für Glasdächer eignet. Bei dieser Variante ist ein dem verstellbaren Auflager 7 gegenüber liegendes Auflager 6 als Schraube oder Bolzen mit einer vorzugsweise flachen Auflagefläche ausgebildet.

Das verstellbare Auflager 7 selbst ist eine Schraube, die in einer im Wesentlichen normal auf die Auskragrichtung 20 gerichteten Gewindebohrung 10 in dem zugeordneten Schenkel 4 in unterschiedlichen Positionen einschraubbar und fixierbar ist.

Das innere Auflager 6 kann ebenfalls in vorteilhafter Weise verstellbar sein, insbesondere um einen weiteren Bereich an Verstellmöglichkeiten zu ermöglichen und einen optimalen Halt der Platte in ihrer Endposition zu ermöglichen.

Um Beschädigungen des plattenförmigen Elementes zu verhindern, die sich bei dieser Ausführungsform insbesondere bei schweren Glasplatten ergeben können, umgreift ein Plattenhalteelement 21 das plattenförmige Element 100 in einem in den Aufnahmeschlitz 5 hineinragenden Bereich, und das plattenförmige Element 100 liegt mit dem Plattenhalteelement 21 auf den Auflagern 6, 7 auf.

Um bei dieser Variante die Stabilität noch weiter zu erhöhen, ist das Plattenhalteelement 21 in einem hinteren, der Öffnung des Grundkörpers 2 abgewandten Bereich über ein Gelenk 11 in dem Grundkörper 2 gelagert. Auf diese Weise wird die Verschwenkbewegung eindeutig definiert und ein Herausgleiten des plattenförmigen Elementes in Auskragrichtung 20 aus den Auflagern 6, 7 heraus ist ebenfalls nicht möglich.

Die Fixierung der Platte 100 in dem Halter 21 selbst erfolgt mit einem eigenen Befestigungselement (kein Bezugszeichen), die Auflager 6, 7 selbst dienen nur der Positionierung der Platte 100 über den Halter 21, nicht aber der Befestigung der Platte 21 in dem Halter 21 selbst.

Die gezeigten Halter 1 bestehen jeweils aus einem Auflager 7 in einem hinteren und einem Auflager 6 in einem vorderen Bereich. Die plattenförmigen Elemente 100 werden durch eine Reihe von solchen Haltern in einer Wand gehalten.

Ein Halter kann aber auch mehrere hintere Auflager und eines oder mehrere vordere, verstellbare Auflager aufweisen, oder ein hinteres und zwei oder mehrere zugeordnete verstellbare Auflager.

## Patentansprüche

1. Halter für ein plattenförmiges Element (100), wie z.B. eine Glasplatte, wobei der Halter einen Grundkörper (2) aufweist, der zwei einander gegenüberliegende Schenkel (3, 4) aufweist, welche einen Aufnahmeschlitz (5) für das auskragende plattenförmige Element (100) bilden, und auf ihrer dem Aufnahmeschlitz (5) zugekehrten Seite (8, 9) je zumindest ein Auflager (6, 7) für das plattenförmige Element (100) aufweisen, wobei die Auflager (6, 7) in Auskragrichtung (20) des plattenförmigen Elementes (100) zueinander versetzt sind,
**dadurch gekennzeichnet, dass**
zumindest eines der Auflager (7) derart verstellbar ist, dass bei einem Verstellen des zumindest einen Auflagers (7) das plattenförmige Element (100) um zumindest ein Auflager (6), welches an dem dem verstellbaren Auflager (7) gegenüber liegenden Schenkel (3) angeordnet ist, verkippt wird.

2. Halter nach Anspruch 1, **dadurch gekennzeichnet, dass** das zumindest eine verstellbare Auflager (7) der von den freien Endbereichen der Schenkel (3, 4) gebildeten Öffnung des Aufnahmeschlitzes (5) näher liegt als das/ die fixe(n) Auflager (6).

3. Halter nach Anspruch 1 oder 2, **dadurch gekennzeichnet, dass** das zumindest eine verstellbare Auflager (7) zumindest im Wesentlichen im rechten Winkel zu der Auskragrichtung (20) verstellbar ist.

4. Halter nach Anspruch 3, **dadurch gekennzeichnet, dass** das verstellbare Auflager (7) eine Schraube ist, die in einer im Wesentlichen normal auf die Auskragrichtung (20) gerichteten Gewindebohrung (10) in dem zugeordneten Schenkel (4) in unterschiedlichen Positionen einschraubbar und fixierbar ist.

5. Halter nach Anspruch 3, **dadurch gekennzeichnet, dass** Bolzen unterschiedlicher Länge als verstellbares Auflager in einer im Wesentlichen normal auf die Auskragrichtung (20) gerichteten Bolzenöffnung in dem dem verstellbaren Auflager zugeordneten Schenkel befestigbar sind.

6. Halter nach Anspruch 3, **dadurch gekennzeichnet, dass** das zumindest eine verstellbare Auflager (7) weiters in einer im Wesentlichen zu der Auskragrichtung (20) parallelen Richtung verstellbar ist.

7. Halter nach Anspruch 6, **dadurch gekennzeichnet, dass** das zumindest eine verstellbare Auflager (7) entlang einer zu der Auskragrichtung (20) geneigten Ebene (12) verschiebbar ist.

8. Halter nach Anspruch 1 oder 2, **dadurch gekennzeichnet, dass** das zumindest eine verstellbare Auflager (7) im Wesentlichen parallel zu der Auskragrichtung (20) verstellbar ist.

9. Halter nach Anspruch 8, **dadurch gekennzeichnet, dass** das zumindest eine verstellbare Auflager (7) eine zu der Auskragrichtung (20) geneigte Auflagefläche (7') aufweist, mit welcher das Auflager (7) mit dem plattenförmigen Element (100) zusammenwirkt, wozu das plattenförmige Element (100) einen entsprechend angepassten, geneigten Anschnitt (15) aufweist.

10. Halter nach Anspruch 9, **dadurch gekennzeichnet, dass** das plattenförmige Element (100) auf einem Plattenauflagerelement (14) aufliegt, wobei das Plattenauflagerelement (14) den mit der geneigten Auflagefläche (7') des Auflagers (7) zusammenwirkenden Abschnitt aufweist.

11. Halter nach Anspruch 10, **dadurch gekennzeichnet, dass** das Plattenauflagerelement (14) einen Aufliegebereich (14') für das Element (100) aufweist, welcher zumindest in Auskragrichtung (20) einen gekrümmten Verlauf aufweist und beispielsweise die Gestalt einer Kugeloberfläche aufweist.

12. Halter nach einem der Ansprüche 6 bis 11, **dadurch gekennzeichnet, dass** das verstellbare Auflager (7) auf einem Gewindestift (16) sitzt, der in dem Grundkörper (2) drehbar gelagert ist.

13. Halter nach einem der Ansprüche 1 bis 12, **dadurch gekennzeichnet, dass** eines oder mehrere der Auflager (6, 7) zumindest im Auflagebereich des plattenförmigen Elementes (100) einen elastischen Überzug aufweist/ aufweisen oder vollständig aus einem elastischen Material gebildet ist/ sind.

14. Halter nach einem der Ansprüche 1 bis 13, **dadurch gekennzeichnet, dass** ein dem zumindest einen verstellbaren Auflager (7) gegenüberliegendes Auflager (6) eine in Auskragrichtung (20) abgerundete, konvexe Auflagefläche (6') aufweist.

15. Halter nach einem der Ansprüche 1 bis 12, **dadurch gekennzeichnet, dass** ein dem verstellbaren Auflager (7) gegenüber liegendes Auflager (6) als Schraube oder Bolzen mit einer vorzugsweise flachen Auflagefläche ausgebildet ist.

16. Halter nach einem der Ansprüche 1 bis 15, **dadurch gekennzeichnet, dass** ein Plattenhalteelement (21) das plattenförmige Element (100) in einem in den Aufnahmeschlitz (5) hineinragenden Bereich umgreift, und das plattenförmige Element (100) mit dem Plattenhalteelement (21) auf den Auflagern (6, 7) aufliegt.

17. Halter nach Anspruch 16, **dadurch gekennzeichnet, dass** das Plattenhalteelement (21) in einem hinteren, der Öffnung des Grundkörpers (2) abgewandten Bereich über ein Gelenk (11) in dem Grundkörper (2) gelagert ist.

## Claims

1. A holder for a plate-shaped element (100) such as a glass pane, for example, wherein the holder comprises a base body (2) which has two opposing legs (3, 4) which form a receiving slot (5) for the projecting plate-shaped element (100) and on its side (8, 9) facing the receiving slot (5) has at least one support (6, 7) for the plate-shaped element (100), wherein the supports (6, 7) are offset with respect to one another in the direction of projection (20) of the plate-shaped element (100), **characterised in that** at least one of the supports (7) can be adjusted in such a manner that during the adjustment of at least one support (7), the plate-shaped element (100) is tilted about at least one support (6) which is located on the leg (3) located opposite to the adjustable support (7).

2. The holder according to claim 1, **characterised in that** the at least one adjustable support (7) lies closer to the opening of the receiving slot (5) formed by the free end regions of the legs (3,4) than the fixed support(s) (6).

3. The holder according to claim 1 or 2, **characterised in that** the at least one adjustable support (7) is adjustable at least substantially at right angles to the direction of projection (20).

4. The holder according to claim 3, **characterised in that** the adjustable support (7) is a screw which can be screwed in various positions into a threaded hole (10) aligned substantially normally to the direction of projection (20) in the allocated leg (4) and fixed.

5. The holder according to claim 3, **characterised in that** bolts of different length can be fixed as an adjustable support in a bolt opening directly substantially normally to the direction of projection (20) in the leg assigned to the adjustable support.

6. The holder according to claim 3, **characterised in that** at least one adjustable support (7) is further adjustable in a direction substantially parallel to the direction of projection (20).

7. The holder according to claim 6, **characterised in that** the at least one adjustable support (7) is displaceable along a plane (12) inclined with respect to the direction of projection (20).

8. The holder according to claim 1 or 2, **characterised in that** at least one adjustable support (7) is adjustable substantially parallel to the direction of projection (20).

9. The holder according to claim 8, **characterised in that** at least one adjustable support (7) has a bearing surface (7') inclined towards the direction of projection (20), with which the support (7) cooperates with the plate-shaped element (100) for which the plate-shaped element (100) has a suitably matched sloping section (15).

10. The holder according to claim 9, **characterised in that** the plate-shaped element (100) rests on a plate support element (14), wherein the plate support element (14) has the section cooperating with the sloping support surface (7') of the support (7).

11. The holder according to claim 10, **characterised in that** the plate support element,(14) has a supporting region (14') for the element (100) which has a curved profile at least in the direction of projection (20) and for example, has the form of a spherical surface.

12. The holder according to any one of claims 6 to 11, **characterised in that** the adjustable support (7) sits on a threaded pin (16) which is rotatably mounted in the base body (2).

13. The holder according to any one of claims 1 to 12, **characterised in that** one, or more supports (6, 7) has/have at least one elastic coating in the bearing region of the plate-shaped element (100) and is/are formed completely of an elastic material.

14. The holder according to any one of claims 1 to 13, **characterised in that** a support (6) opposite the at least one adjustable support (7) has a convex bearing surface (6') which is rounded in the direction of projection (20).

15. The holder according to any one of claims 1 to 12, **characterised in that** a support (6) located opposite to the adjustable support (7) is configured as a screw or bolt with a preferably flat bearing surface.

16. The holder according to any one of claims 1 to 15, **characterised in that** a plate-retaining element (21) embraces the plate-shaped element (100) in a region projecting into the receiving slot (5) and the plate-shaped element (100) with the plate-retaining element (21) rests on the supports (6, 7).

17. The holder according to claim 16, **characterised in that** the plate-retaining element (21) is mounted in a rear region facing away from the opening in the base body (2) by means of a joint (11) in the base body (2).

## Revendications

1. Support pour un élément en forme de panneau (100), tel que par exemple un panneau en verre, le support comportant un corps de base (2) qui comporte deux branches (3, 4) mutuellement opposées, formant une échancrure de logement (5) pour l'élément débordant en forme de panneau (100) et comportant chacune sur leur face (8, 9) dirigée vers l'échancrure de logement (5) au moins un appui (6, 7) pour l'élément en forme de panneau (100), les appuis (6, 7) étant déportés l'un par rapport à l'autre, dans le sens de débordement (20) de l'élément en forme de panneau (100),
**caractérisé en ce que**
au moins l'un des appuis (7) est réglable de sorte que, lors d'un réglage du au moins un appui (7), l'élément en forme de panneau (100) et au moins un appui (6), qui est disposé sur la branche (3) qui est opposée à l'appui réglable (7) bascule.

2. Support selon la revendication 1, **caractérisé en ce que** le au moins un appui (7) réglable est plus proche de l'ouverture de l'échancrure de logement (5) formée par les extrémités libres des branches (3, 4) que l'appui/les appuis fixe(s) 6.

3. Support selon la revendication 1 ou 2, **caractérisé en ce que** le au moins un appui (7) réglable est réglable au moins sensiblement à angle droit par rapport à la direction de débordement (20).

4. Support selon la revendication 3, **caractérisé en ce que** l'appui (7) réglable est une vis, susceptible d'être vissée et fixée dans différentes positions dans un taraudage (10) sensiblement orienté à la normale dans la direction de débordement (20), dans la branche (4) associée.

5. Support selon la revendication 3, **caractérisé en ce que** des boulons de différentes longueurs, sont susceptibles d'être fixés en tant qu'appui réglable dans un orifice pour boulon sensiblement orienté à la normale par rapport à la direction de débordement (20), dans la branche associée à l'appui réglable.

6. Support selon la revendication 3, **caractérisé en ce que** le au moins un appui (7) réglable est réglable par ailleurs dans une direction sensiblement parallèle à la direction de débordement (20).

7. Support selon la revendication 6, **caractérisé en ce que** le au moins un appui (7) réglable est déplaçable en translation le long d'un plan (12) incliné par rapport à la direction de débordement (20).

8. Support selon la revendication 1 ou 2, **caractérisé en ce que** le au moins un appui (7) réglable est réglable sensiblement à la parallèle de la direction de débordement (20).

9. Support selon la revendication 8, **caractérisé en ce que** le au moins un appui (7) réglable comporte une surface d'appui (7') inclinée par rapport à la direction de débordement (20), par laquelle l'appui (7) coopère avec l'élément en forme de panneau (100) ce pour quoi l'élément en forme de panneau (100) comporte une entamure (15) inclinée, adaptée en conséquence.

10. Support selon la revendication 9, **caractérisé en ce que** l'élément en forme de panneau (100) repose sur un élément d'appui de panneau (14), l'élément d'appui de panneau (14) comportant la section coopérant avec la surface d'appui inclinée (7') de l'appui (7).

11. Support selon la revendication 10, **caractérisé en ce que** l'élément d'appui de panneau (14) comporte une zone de soutien (14') pour l'élément (100), qui au moins en direction de débordement (20) comporte un trajet curviligne, et qui a par exemple la conformation d'une surface sphérique.

12. Support selon l'une quelconque des revendications 6 à 11, **caractérisé en ce que** l'appui (7) réglable repose sur une tige filetée (16), qui est logée en rotation dans le corps de base (2).

13. Support selon l'une quelconque des revendications 1 à 12, **caractérisé en ce que** l'un ou plusieurs des appuis (6, 7) comporte(nt) au moins dans la zone de soutien de l'élément en forme de panneau (100) un revêtement élastique ou **en ce qu'**il est/ils sont formé(s) entièrement dans une matière élastique.

14. Support selon l'une quelconque des revendications 1 à 13, **caractérisé en ce que**, un appui (6) opposé au au moins un appui (7) réglable comporte une surface d'appui (6') convexe, arrondie dans la direction de débordement (20).

15. Support selon l'une quelconque des revendications 1 à 12, **caractérisé en ce que**, un appui (6) opposé à l'appui réglable (7) est conçu sous la forme d'une vis ou d'un boulon, avec une surface d'appui de préférence plate.

16. Support selon l'une quelconque des revendications 1 à 15, **caractérisé en ce que**, un élément de maintien du panneau (21) entoure l'élément en forme de panneau (100) dans une zone saillant dans l'échancrure de logement (5), et l'élément en forme de panneau (100) repose avec l'élément de maintien du panneau (21) sur les appuis (6, 7).

17. Support selon la revendication 16, **caractérisé en ce que** sur une zone arrière, opposée à l'ouverture du corps de base (2), l'élément de maintien du panneau (21) est logé dans le corps de base (2) par l'intermédiaire d'une articulation (11).
